Europäisches Patentamt

(19) European Patent Office

Office européen des brevets

(11) Numéro de publication : **0 316 423 B1**

(12)     # FASCICULE DE BREVET EUROPEEN

(45) Date de publication du fascicule du brevet :
**08.05.91 Bulletin 91/19**

(51) Int. Cl.⁵ : **A01G 7/00**

(21) Numéro de dépôt : **88905213.0**

(22) Date de dépôt : **03.06.88**

(86) Numéro de dépôt international :
**PCT/FR88/00284**

(87) Numéro de publication internationale :
**WO 88/09611 15.12.88 Gazette 88/27**

(54) **APPAREIL POUR DETECTER LES ECHANGES A TRAVERS L'EXTREMITE COUPEE D'UN RAMEAU DE VEGETAL.**

(30) Priorité : **03.06.87 FR 8707735**

(43) Date de publication de la demande :
**24.05.89 Bulletin 89/21**

(45) Mention de la délivrance du brevet :
**08.05.91 Bulletin 91/19**

(84) Etats contractants désignés :
**AT BE CH DE FR GB LI**

(56) Documents cités :
**Patent Abstracts of Japan, vol. 8, no. 137
(P-282) (1574), 26 juin 1984
Patent Abstracts of Japan, vol. 6, no. 229
(P-155) (1107), 16 novembre 1982**

(56) Documents cités :
**Soviet Inventions Illustrated, semaine 8645, 20
novembre 1986, résumé no. 86-297831/45,
Derwent Publications Ltd (London, GB)
Soviet Inventions Illustrated, semaine 27, 17
août 1983, résumé no. 83-704376/27, Derwent
Publications Ltd (London, GB)**

(73) Titulaire : **CASSAGNE, Serge**
**14, rue Vergniaud**
**F-75013 Paris (FR)**

(72) Inventeur : **CASSAGNE, Serge**
**14, rue Vergniaud**
**F-75013 Paris (FR)**

(74) Mandataire : **Bouju, André**
**Cabinet Bouju, 38, Avenue de la Grande
Armée**
**F-75017 Paris (FR)**

## Description

La présente invention concerne un appareil pour détecter les échanges à travers l'extrémité coupée d'un rameau de végétal, à des fins expérimentales, le plus souvent pédagogiques. L'invention vise notamment les appareils de photosynthèse et les potomètres.

On connaît un appareil de photosynthèse comprenant une cuve du genre tube à essais destinée à contenir un rameau d'une plante aquatique telle que l'Elodée du Canada, dont l'extrémité coupée est dirigée vers le haut. Cette extrémité est reçue dans l'embouchure, plongeant dans la cuve, d'un tube de dégagement gazeux dirigé vers le haut pour canaliser et piéger les bulles de gaz émises par l'extrémité coupée de la tige lorsque le rameau est éclairé de façon appropriée. Pour cela, la cuve est transparente.

La mise en place de l'expérience avec cet appareil est particulièrement laborieuse. Pour que le dégagement gazeux puisse être visualisé et isolé dans le tube, il est nécessaire que le tube soit initialement rempli de liquide, par purge de l'air au moyen d'une seringue. A mesure qu'on purge l'air initialement contenu dans le tube, du liquide est aspiré de la cuve et il faut donc compléter son niveau pour maintenir l'embouchure du tube immergée. Après cela, il faut mettre en place le rameau de végétal dans la cuve, ce qui est malaisé. L'accès à la cuve est rendu difficile par la présence du tube. L'agitation qui en résulte à la surface du liquide dans la cuve risque de permettre une entrée d'air dans le tube ce qui obligerait à recommencer la purge. De plus, il est nécessaire que l'extrémité coupée du rameau d'Elodée reste engagée dans l'entonnoir d'entrée du tube. Faute de cela, le dégagement gazeux s'échapperait à l'air libre par la surface du bain au lieu d'être canalisé dans le tube. On pourrait songer à enfoncer profondément le rameau dans l'entonnoir pour qu'il y reste retenu par friction, mais on obturerait alors l'embouchure du tube, ce qui empêcherait le dégagement gazeux de s'effectuer puisque le liquide contenu initialement dans le tube, empêché de retourner dans la cuve, ne laisserait aucune place au gaz.

On connaît également des appareils pour mesurer l'absorption d'eau par une plante, ou potomètre. Ces appareils connus présentent aussi, outre l'encombrement et une grande fragilité dus à un tube en U, un problème de purge.

Le but de l'invention est de remédier à ces inconvénients en proposant un appareil du genre appareil de photosynthèse ou potomètre très facile à mettre en oeuvre.

L'invention vise ainsi un appareil de détection des échanges à travers l'extrémité coupée d'un rameau de végétal, comprenant une cuve, un tube de transit communiquant par une première extrémité avec la cuve et dont l'une des extrémités au moins est destinée à recevoir l'extrémité coupée d'un rameau de végétal.

Suivant l'invention, une seconde extrémité du tube est associée à des moyens capables de contenir un liquide, le tube de transit établissant, au moins en l'absence du rameau, une liaison de vase communicant entre la cuve et les moyens capables de contenir un liquide.

Ainsi, la purge du tube s'effectue de manière très simple en remplissant la cuve de manière que le liquide remplisse également les moyens pour contenir un liquide, et ceci par l'intermédiaire du tube de transit. Pour une expérience de photosynthèse, il suffit ensuite de mettre en place le rameau de végétal dans la cuve avec son extrémité coupée engagée dans le tube de transit. Cette opération ne pose plus de difficultés et ceci pour deux raisons. D'une part, au lieu d'être dirigée vers le haut l'embouchure du tube de transit, pour établir la liaison de vase communicant précitée, se trouve en une position laissant libre l'accès par le dessus de la cuve. D'autre part, rien n'empêche selon l'invention d'engager l'extrémité coupée du rameau dans l'embouchure à la manière d'un bouchon, bien entendu sans trop le comprimer. Le dégagement gazeux s'effectuera quand même librement vers les moyens adaptés à contenir un liquide, lesquels peuvent être constitués par une extrémité recourbée vers le haut du tube ou par une cuve dite "de dégagement".

Si l'on désire non seulement constater le dégagement gazeux, mais en outre le recueillir, on utilise par exemple un tube à essais que l'on remplit d'eau et que l'on bouche avec le doigt avant de le retourner et de plonger dans la cuve de dégagement son ouverture ainsi obturée, après quoi on enlève le doigt de ladite ouverture pour engager celle-ci sur le débouché (la seconde extrémité) du tube de dégagement gazeux. Le dégagement gazeux va ainsi se faire dans le tube à essais, tandis que celui-ci se vide progressivement de son eau dans la cuve de dégagement. Pour éviter que l'eau contamine la cuve de photosynthèse par l'intermédiaire du tube de dégagement gazeux, il suffit de disposer, comme indiqué plus haut, le rameau de végétal à la manière d'un bouchon dans la première extrémité du tube de dégagement gazeux.

Pour l'utilisation en potomètre, après remplissage, on injecte une bulle d'air dans le tube puis on engage l'extrémité coupée du rameau dans la seconde extrémité du tube, dirigée vers le haut. Le rameau transpire en fonction des conditions auxquelles il est exposé (température, ventilation) et absorbe par son extrémité coupée une quantité d'eau que l'on peut constater et/ou mesurer d'après le déplacement de la bulle.

Selon une particularité avantageuse de l'invention, en vue de l'utilisation en tant qu'appareil de photosynthèse sur une table lumineuse, en particulier sur la table lumineuse d'un rétroprojecteur, la cuve a un fond perméable à la lumière.

Ainsi, la table lumineuse sert d'une part à assurer l'éclairement nécessaire pour la réaction de photosynthèse, et d'autre part à visualiser le dégagement. Ce double rôle de l'éclairage fourni par la table lumineuse est permis par le fait que la cuve, le tube de transit et les moyens pour contenir un liquide, qui sont en liaison de vase communicant, sont sensiblement situés à même hauteur. Si la table lumineuse est celle d'un rétroprojecteur, il est possible avec un seul appareil de visualiser l'expérience pour l'ensemble des élèves d'une classe.

Il est certes aussi connu de placer dans un projecteur du type pour diapositives une cuve transparente contenant un rameau d'Elodée pour projeter sur écran l'image de l'élodée et du dégagement gazeux qu'elle produit. Toutefois, il est alors impossible de visualiser le dégagement dans un tube. L'invention permet de visualiser l'expérience de photosynthèse sous une forme beaucoup plus perfectionnée. En particulier, des graduations prévues sur le tube de transit ou des feuilles transparentes millimétrées placées sous le tube seront également visibles sur l'écran.

De plus, dans l'expérience connue antérieurement, l'éclairage fourni par le projecteur sert à la fois à provoquer le dégagement et à visualiser l'expérience. Il n'est donc pas possible de montrer par projection l'effet de l'obscurité sur le rameau de végétal. Au contraire, dans un mode de réalisation avantageux, l'appareil selon l'invention comprend des moyens pour régler l'éclairement de la cuve de photosynthèse à travers le fond de celle-ci, et la cuve de dégagement est transparente indépendamment des moyens précités.

On notera encore que l'éclairage par un rétroprojecteur chauffe beaucoup moins l'objet projeté qu'un projecteur à diapositives, et par conséquent influe beaucoup moins sur le bon déroulement de l'expérience.

De préférence encore, l'appareil selon l'invention a, vu de dessus, une forme rectangulaire allongée permettant de disposer plusieurs appareils semblables côte à côte sur la table lumineuse d'un rétroprojecteur, afin d'effectuer de manière simultanée une expérimentation comparative.

D'autres particularités et avantages de l'invention ressortiront encore de la description ci-après.

Aux dessins annexés, donnés à titre d'exemples non limitatifs :

    – la figure 1 est une vue en perspective avec arrachement de l'appareil selon l'invention, utilisé en appareil de photosynthèse ;

    – la figure 2 est une vue en coupe longitudinale du dispositif de la figure 1, en cours d'utilisation ;

    – les figures 3 à 6 sont des vues du dispositif des figures 1 et 2, en coupe selon les plans III-III, IV-IV, V-V, VI-VI respectivement de la figure 2, la figure 4 visualisant toutefois un autre moyen de réglage de l'éclairement dans la cuve de photosynthèse ;

    – la figure 7 est une vue de plusieurs appareils tels que celui des figures 1 à 6, disposés côte à côte sur un rétroprojecteur ;

    – la figure 8 est une perspective partielle d'un second mode de réalisation de l'appareil selon l'invention, le couvercle étant représenté dans deux positions différentes ;

    – la figure 9 est une vue en coupe selon le plan IX-IX de la figure 8 ;

    – la figure 10 est une vue en coupe selon le plan X-X de la figure 9 ; et

    – la figure 11 est une vue de l'utilisation en potomètre.

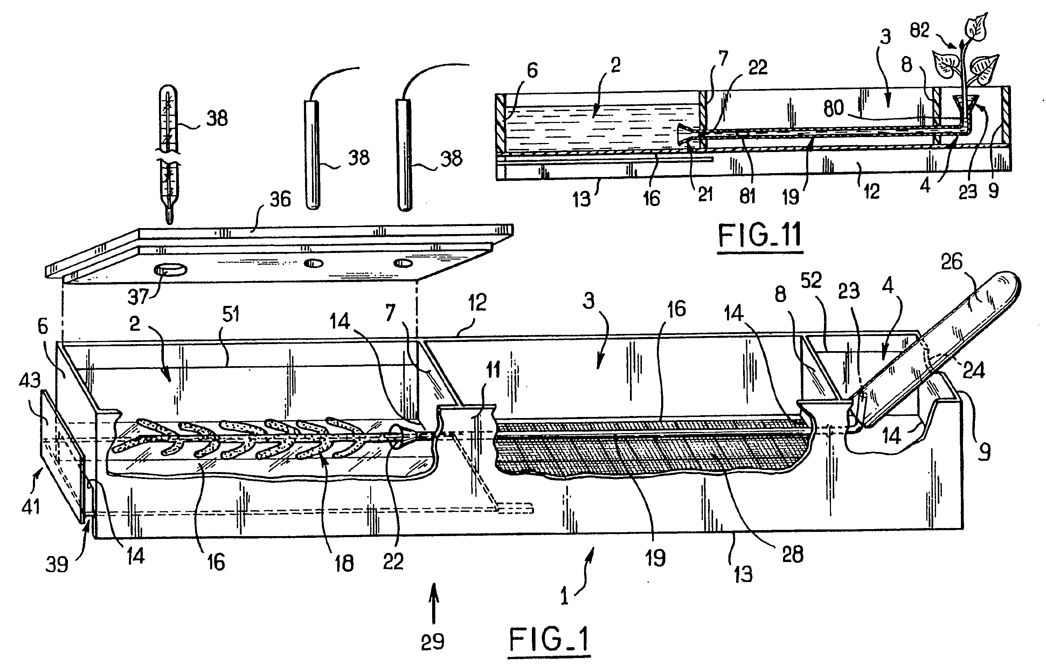

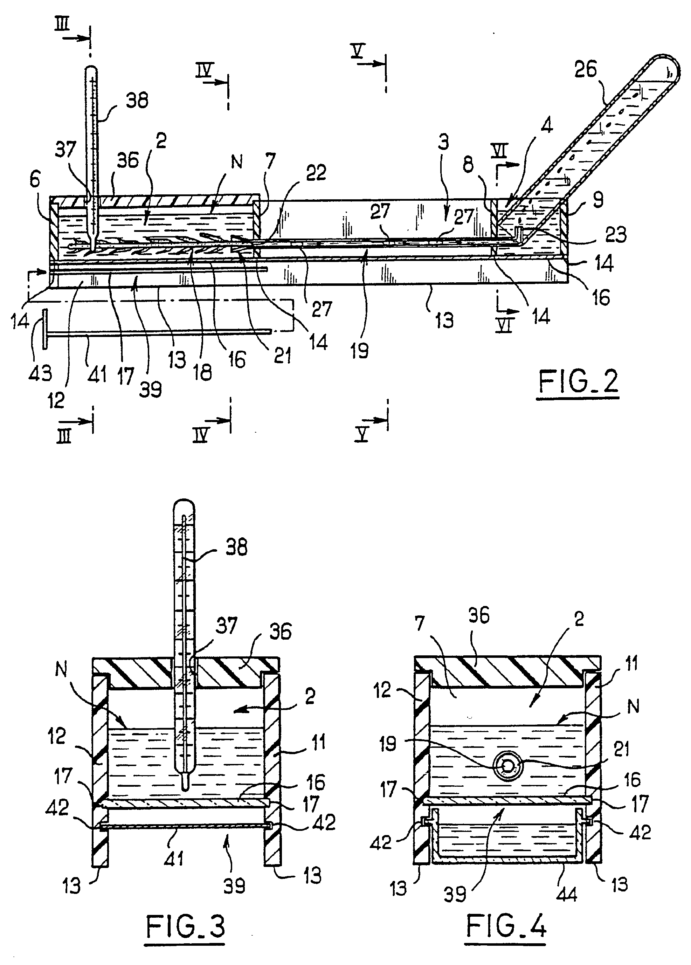

L'appareil selon l'invention comprend un corps 1 en matière plastique opaque, par exemple en polystyrène, qui définit les parois latérales de trois compartiments rectangulaires 2, 3 et 4, alignés (figures 1 et 2).

Le corps 1 définit en particulier quatre parois transversales 6 à 9, parallèles entre elles, et deux parois longitudinales 11 et 12 parallèles entre elles et réunies l'une à l'autre par chacune des parois transversales 6 à 9. Les parois longitudinales 11 et 12 ont chacune un bord inférieur 13 décalé vers le bas par rapport au bord inférieur 14 de chacune des parois transversales 6 à 9. Les parois longitudinales 11 et 12 forment ainsi un piètement de l'appareil par rapport auquel les parois 6 à 9 sont surélevées. Une plaque plane transparente 16, par exemple en verre, est engagée entre les parois latérales 11 et 12 dans deux rainures 17 (figures 3 à 6) que présentent l'une vers l'autre les deux parois 11 et 12. La position des rainures 17 est telle que la plaque de verre est parallèle au plan d'appui défini par les bords 13 et se trouve au contact du bord inférieur 14 de chacune des parois transversales 6 à 9. La plaque 16 est collée de manière étanche dans les rainures 17 et contre les bords 14 des parois 6 à 9.

La plaque 16 constitue ainsi un fond transparent pour une cuve de photosynthèse formée par le compartiment 2, situé à l'une des extrémités de l'alignement des compartiments 2, 3 et 4.

La cuve de photosynthèse 2 est destinée à contenir sensiblement en position horizontale et parallèle aux parois 11 et 12 un rameau de végétal 18 (figure 2), d'une plante aquatique telle que l'Elodée, dans un liquide approprié pour les expériences envisagées, atteignant un niveau N qui n'a pas besoin d'être déterminé avec précision.

Un tube de transit – ou tube de dégagement gazeux – 19, en matière transparente telle que le verre, a une première extrémité – ou embouchure – 21 en forme d'entonnoir située dans la cuve 2 au-dessous du niveau N et destinée à recevoir l'extrémité sectionnée 22 du rameau 18.

Conformément à l'invention, le tube de dégagement gazeux 19 établit, du moins en l'absence du rameau 18, une liaison de vase communicant entre la cuve de photosynthèse 2 et une cuve de dégagement qui est constituée, au-dessus de la plaque 16, par le compartiment 4 situé à l'autre extrémité de l'alignement des compartiments 2, 3 et 4.

Lorsque l'appareil est en position de service, la majeure partie de la longueur du tube 19 est sensiblement horizontale, avec éventuellement une très légère pente montante de la cuve 2 vers la cuve 4 pour assurer le bon transit du gaz en cours d'expérience. De préférence, les cuves 2 et 4 présentent sur leur paroi intérieure des repères de niveau de liquide 51 et 52 (figure 1) disposés l'un par rapport à l'autre de façon à être simultanément atteints lorsque l'horizontalité ou la légère pente de l'appareil est correcte. La direction de l'embouchure 21 est, en service, sensiblement horizontale. Le tube 19 traverse de manière étanche la paroi 7 séparant les compartiments 2 et 3 et la paroi 8 séparant les compartiment 3 et 4. Dans le compartiment 4 – ou cuve de dégagement –, le tube 19 est coudé de manière à présenter une seconde extrémité – ou débouché – 23 dirigé à l'opposé de la paroi 16, c'est-à-dire vers le haut lorsque l'appareil est en position de service. Toutefois, le débouché 23 est situé en-dessous du niveau atteint par le liquide dans la cuve de dégagement 4 en vertu de la liaison du type vase communicant avec la cuve de photosynthèse 2.

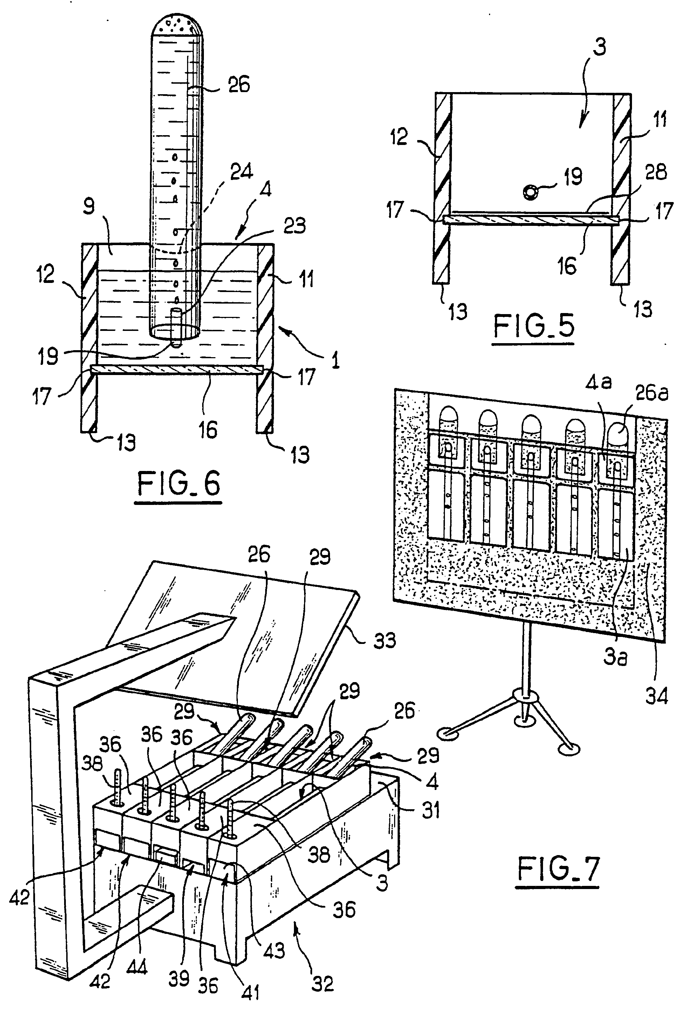

Comme le montrent les figures 1 et 6, la paroi transversale 9 du corps 1 présente au milieu de son bord supérieur une encoche 24 destinée à contribuer au positionnement d'un tube à essais 26 dont l'ouverture dirigée obliquement vers le bas est engagée librement et avec jeu autour du débouché 23 du tube 19.

Le tube 19 s'étend dans un plan parallèle aux parois longitudinales 11 et 12. Ainsi, dans le compartiment 3, le tube s'étend de manière rectiligne à une certaine distance au-dessus de la paroi transparente 16. Comme le montre la figure 2, le compartiment 3 est un compartiment d'observation des bulles 27 dégagées par l'élodée 18. On peut compter le nombre de bulles par unité de temps, et comparer les nombres de bulles par unité de temps relevés dans différentes conditions d'expérience. Pour affiner l'expérimentation, on peut disposer sur la face supérieure de la paroi 16, dans le compartiment 3, une feuille transparente à quadrillage millimétré 28 (figure 1) permettant de mesurer la longueur des bulles, et par conséquent leur volume, le diamètre intérieur du tube 19 étant connu. En service, le compartiment 3 ne contient pas de liquide.

Comme le montre la figure 7, l'appareil 29 qui vient d'être décrit est plus particulièrement destiné à être utilisé sur une table lumineuse horizontale 31, et en particulier la table lumineuse 31 d'un rétroprojecteur 32. Par "rétroprojecteur", on entend un appareil dont la table 31 projette par transparence l'image des objets 29 placés sur elle, vers un miroir oblique 33 qui renvoie l'image vers un écran de visualisation 34.

L'appareil décrit en référence aux figures 1 à 6 a une forme rectangulaire très allongée parallèlement aux parois 11 et 12, de sorte qu'il a été possible de disposer côte à côte cinq appareils 29 sur la table lumineuse 31 du rétroprojecteur 32. On peut ainsi visualiser sur l'écran 34, à titre comparatif, cinq expériences réalisées dans des conditions différentes.

En vue de l'utilisation sur table lumineuse 31, le compartiment 3 et la cuve de dégagement 4 sont transparents selon une direction perpendiculaire à la paroi transparente 16. Ainsi, la lumière émise par la table 31 projette sur l'écran 34, via le miroir 33, l'image du dispositif expérimental occupant chaque compartiment 3 et chaque chambre de dégagement 4.

La lumière émise par la table 31 sert également à éclairer l'intérieur de la cuve de photosynthèse 2 à travers la paroi 16. Pour éviter toute influence parasite sur cet éclairage, la cuve 2 est équipée d'un couvercle amovible 36 qui, en cours d'expérience, ferme supérieurement la cuve 2. Le couvercle 36 est toutefois équipé d'un ou plusieurs orifice(s) 37 permettant de plonger dans la cuve 2 un ou plusieurs appareils de mesure tels qu'un thermomètre, pH mètre, oxymètre 38. Toujours pour éviter d'altérer l'éclairage à l'intérieur de la cuve 2, celle-ci a des surfaces intérieures de couleur blanche, à l'exception bien entendu de son fond transparent 16. Pour la réalisation de telles parois blanches, il est avantageux que la matière plastique constituant le corps 1 et le couvercle 36 soit opaque et ait dans la masse une couleur blanche.

Compte tenu de la présence des couvercles 36 (figure 7) le rétroprojecteur 32 ne fournit pas d'image des cuves de photosynthèse 2 sur l'écran 34. Seules apparaissent sur l'écran 34 les images 3a et 4a des compartiments 3 et cuves 4 respectivement, de même que les images 26a des tubes à essais 26. Pour que la transmission de ces images soit aussi bonne que possible, les compartiments 3 et les cuves 4 sont ouverts vers le haut pendant l'expérience.

L'appareil selon l'invention comprend encore des moyens pour régler l'éclairement de la cuve de photosynthèse 2 à travers le fond 16 de celle-ci, et ces moyens de réglage n'affectent pas la transparence du compartiment 3 et de la cuve de dégagement 4.

Au titre de ces moyens de réglage (figures 2 à 4), il est prévu sous le fond 16 de la cuve de photosynthèse 2 un emplacement libre 39 situé entre les parois longitudinales 11 et 12. Des écrans opaque et respectivement colorés 41 peuvent tour à tour être positionnés amoviblement dans l'espace 39 parallèlement à la paroi 16 et retenus en cette position par deux glissières 42 portées en regard l'une de l'autre par les parois 11 et 12 respectivement. Chaque écran 41 a, parallèlement à la direction longitudinale des parois 11 et 12, une dimension longitudinale lui permettant de déborder légèrement sous le compartiment 3 pour empêcher au mieux le passage oblique de la lumière entre l'extrémité de l'écran 41 et le bord inférieur 14 de la cloison 7. Les obturateurs 41 présentent à leur extrémité adjacente en service à la cloison 6 une plaquette de fermeture 43 fermant sensiblement l'extrémité correspondante de l'espace inférieur 39.

Les moyens pour régler l'éclairement de la cuve 2 à travers son fond 16 comprennent également une cuve additionnelle 44 (figure 4) de forme appropriée pour occuper l'espace 39 sous la cuve 2. La cuve additionnelle 44 est adaptée à contenir un liquide, par exemple une solution de chlorophylle, propre à altérer l'éclairage d'une manière influant sur le phénomène de photosynthèse.

On va maintenant décrire le fonctionnement de l'appareil des figures 1 à 7.

Au départ, en l'absence du rameau 18, l'appareil étant propre et sec, on remplit la cuve 2 avec un liquide qui peut être par exemple de l'eau distillée, une eau à étudier, par exemple eau du robinet, eau d'une mare ou d'une rivière, une eau avec divers additifs tels que anesthésiants, poisons, polluants, $CO_2$, ou encore une eau dont le pH est choisi à volonté. Le remplissage de la cuve 2 provoque celui de la cuve 4 par l'intermédiaire du tube 19 qui, en fin de remplissage, est également plein.

On place ensuite dans la cuve 2 le rameau 18 en enfonçant l'extrémité sectionnée du rameau dans l'embouchure 19 de façon que ladite extrémité y forme un bouchon. On dispose le couvercle 36 au sommet de la cuve et l'appareil 38 dans l'orifice 37.

On remplit ensuite d'eau le tube 26, on le bouche avec le doigt en prenant soin de ne pas enfermer de bulles d'air, on le retourne et on le plonge dans la cuve de dégagement 4, on enlève le doigt de l'ouverture du tube 26, et on place celle-ci, en la maintenant immergée, autour du débouché 23 du tube 19.

Après avoir mis éventuellement en position un écran 41 ou la cuve 44 sous la cuve de photosynthèse 2, on place l'appareil 29 sur la table lumineuse 31, de manière à observer le phénomène sur l'écran 34.

Grâce à l'espace 39 séparant la cuve de photosynthèse 2 de la table lumineuse 31, le dégagement calorifique de la table 31, déjà faible en soi, n'a qu'une influence réduite sur la température dans la cuve de photosynthèse 2.

Comme le montre la figure 2, les gaz dégagés vont s'amasser au fond, dirigé vers le haut, du tube 26, tandis que l'eau contenue dans celui-ci est refoulée de manière correspondante dans la cuve 4. Cependant, il n'y pas reflux vers la cuve 2 car l'extrémité 22 du rameau 18 obture de manière sensiblement étanche le tube 19. Le liquide dans la cuve 2 n'est donc pas altéré. Lorsque le niveau dans la cuve 4 augmente en raison de l'apport en provenance du tube 26, un éventuel trop plein peut déborder par l'encoche 24, mais on peut le prévenir par prélèvement avec un compte-goutte.

Quel que soit l'écran 41 ou le liquide (contenu dans la cuve 44) qui est interposé entre la source lumineuse et la cuve de photosynthèse 2, la visualisation du dégagement est toujours optimale sur l'écran 34.

L'appareil 29 qui vient d'être décrit est également utilisable par observation directe sur table lumineuse, ou encore par observation directe sur table normale, l'éclairage des trois compartiments se faisant par le haut avec de préférence sous la cuve 2 un écran 41 opaque de couleur blanche. L'éclairage dans la cuve 2 peut être réglé au moyen de couvercles tels que 36 (non représentés) transparents avec ou sans coloration, ou encore au moyen d'une cuve additionnelle telle que 44 posée sur le couvercle transparent. Bien entendu, le couvercle opaque 36 peut être mis en place si l'on désire expérimenter le cas où le rameau 18 est dans l'obscurité.

L'expérimentation du phénomène sous lumière variable peut être réalisée par réglage de la puissance de la source lumineuse d'éclairage (les rétroprojecteurs comportent en général un tel réglage) ou par interposition d'écrans atténuateurs du genre papier calque entre la source lumineuse et la cuve.

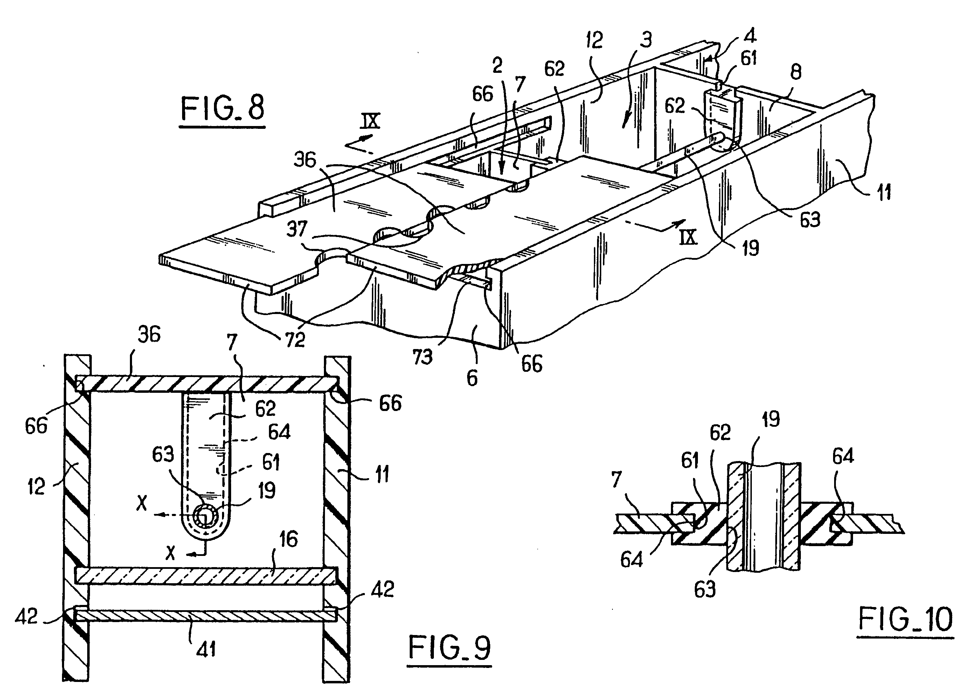

Dans le mode de réalisation des figures 8 à 10, que l'on ne décrira qu'en ce qui concerne ses différences avec le précédent, les cloisons 7 et 8 présentent chacune une fente verticale médiane 61, s'ouvrant vers le haut de l'appareil et capable de recevoir de manière étanche un insert en caoutchouc ou analogue 62 traversé par un orifice 63 pour le tube de dégagement gazeux 19. Chaque insert 62 peut être engagé par coulissement dans la fente 61 correspondante. Le bord de la fente 61 est reçu avec un certain serrage élastique dans une gorge périphérique 64 de l'insert, de manière à assurer l'étanchéité.

Le couvercle 36 est un tiroir coulissant dans des rainures intérieures opposées 66 des parois latérales 11, 12. En position complètement enfoncée, (moitié de droite du couvercle 36 sur la figure 8), le couvercle 36 est en contact par sa face inférieure avec le bord supérieur de la cloison 7 et de l'insert 62.

A distance de la cloison 7, le couvercle 36 comporte un bord 72 qui, lorsque le couvercle 36 est complètement enfoncé, dépasse la paroi terminale 6 de l'appareil.

Le bord supérieur 73 de la paroi 6, qui est dans le plan de la face inférieure des rainures 66 (figure 8), est alors en contact avec la face inférieure du couvercle 36.

Grâce au montage du tube 19 dans les inserts 62, le tube peut être remplacé si on l'a cassé ou si l'on désire lui substituer un autre tube par exemple de diamètre différent. Le couvercle coulissant 36 est plus stable que le couvercle des figures 1 à 7, notamment lorsque des instruments sont engagés dans les orifi

ces tels que 37. Avantageusement, les rainures 66 sont identiques aux rainures 42 (figure 10), ce qui permet de remplacer le couvercle coulissant 36 par un filtre tel que 41, et inversement d'engager le couvercle 36 dans les rainures 42 si l'on désire empêcher l'arrivée de lumière à travers le fond transparent 16.

L'exemple représenté à la figure 11 illustre l'utilisation en potomètre. L'appareil utilisé est le même que celui des figures 1 à 10 excepté que la seconde extrémité 23 du tube de transit 19 a été élargie en entonnoir. Un tel élargissement n'est pas de nature à perturber l'expérience de photosynthèse. Par conséquent, un seul et même appareil selon l'invention est utilisable au choix comme appareil de photosynthèse ou comme potomètre.

Pour l'utilisation en potomètre, on remplit d'eau la cuve 2 jusqu'à ce que l'eau affleure la seconde extrémité 23 du tube 19, dans le compartiment 4, lequel ne contient donc pas d'eau, les moyens pour contenir un liquide adjacents à l'extrémité 23 étant constitués par la terminaison verticale 80 du tube 19.

Ensuite, au moyen d'une seringue non représentée, on introduit par l'extrémité 21 une bulle d'air 81 dans la région horizontale du tube 19. On engage ensuite dans l'extrémité 23 du tube 19 l'extrémité coupée d'un rameau de plante aérienne 82. On établit au voisinage du rameau les conditions voulues, en particulier de température et de ventilation. Le rameau compense sa transpiration par une absorption d'eau à travers son extrémité coupée. Cette absorption est visualisée par un déplacement de la bulle d'air 81 en direction de l'extrémité 23. Connaissant le diamètre du tube, la mesure de ce déplacement est une mesure de la quantité d'eau absorbée par le rameau.

Cette expérience, en particulier le déplacement de la bulle, peuvent être visualisés pour tout un groupe grâce au rétroprojecteur.

Bien entendu, l'invention n'est pas limitée à l'exemple décrit.

En particulier, l'invention englobe le cas où le fond de la cuve de photosynthèse est fermé de manière permanente par une paroi opaque, la face perméable à la lumière étant constituée par la paroi supérieure ou l'une des parois latérales.

Il est possible de prévoir plusieurs tubes tels que 19, reliant tous la cuve 2 à la cuve 4, de manière que l'on puisse comparer le comportement de plusieurs végétaux différents dans des conditions identiques.

## Revendications

1. Appareil de détection des échanges à travers l'extrémité coupée d'un rameau de végétal, comprenant une cuve (2), un tube de transit (19) communiquant par une première extrémité avec la cuve (2) et dont l'une des extrémités au moins est destinée à recevoir l'extrémité coupée d'un rameau de végétal, caractérisé en ce qu'une seconde extrémité (23) du tube (19) est associée à des moyens (4, 80) capables de contenir un liquide, le tube de transit établissant, au moins en l'absence du rameau, une liaison de vase communicant entre la cuve (2) et les moyens capables de contenir un liquide (4, 80).

2. Appareil selon la revendication 1, à usage de potomètre, caractérisé en ce que l'extrémité du tube de transit adaptée à recevoir l'extrémité coupée du rameau est la seconde extrémité (23) du tube, et en ce qu'au titre des moyens capables de contenir un liquide, une région terminale (80) du tube, adjacente à la seconde extrémité (23) de celui-ci, est dirigée en service vers le haut.

3. Appareil selon la revendication 1, à usage d'appareil de photosynthèse, caractérisé en ce que la cuve est une cuve de photosynthèse (2) dont une face au moins (18) est perméable à la lumière, et en ce que l'extrémité du tube de transit (19) destinée à recevoir l'extrémité coupée (22) d'un rameau de végétal (18), est la première extrémité (21) du tube de transit (19).

4. Appareil de photosynthèse selon la revendication 3, caractérisé en ce que, en vue de l'utilisation sur une table lumineuse (31), en particulier sur la table lumineuse d'un rétroprojecteur (32), la face perméable à la lumière de la cuve de photosynthèse est le fond de cette dernière.

5. Appareil selon la revendication 4, caractérisé en ce qu'il comprend des moyens (39, 41 à 44) pour régler l'éclairement de la cuve de photosynthèse (2) à travers le fond (16) de celle-ci, et en ce que les moyens capables de contenir un liquide (4) sont transparents selon un axe en service sensiblement vertical, indépendamment des moyens pour régler l'éclairement (39, 41 à 44).

6. Appareil selon la revendication 5, caractérisé en ce que les moyens pour régler l'éclairement à l'intérieur de la cuve de photosynthèse (2) comprennent sous le fond (16) de la cuve de photosynthèse (2) des moyens (39, 42) pour y positionner des organes choisis dans le groupe comprenant écran opaque (41), écran translucide coloré (42), cuve additionnelle (44) et analogues.

7. Appareil selon l'une des revendications 3 à 6, caractérisé par des moyens (6, 7, 11, 12, 36) pour rendre la cuve de photosynthèse (2) sensiblement opaque à l'exception de sa face perméable à la lumière (16).

8. Appareil selon la revendication 7, caractérisé en ce que les moyens pour rendre la cuve de photosynthèse (2) sensiblement opaque comprennent un couvercle amovible opaque (36), sélectivement adaptable sur la cuve de photosynthèse (2) à l'opposé du fond (16).

9. Appareil selon la revendication 8, caractérisé en ce que le couvercle est percé d'au moins un orifice (37) d'introduction d'un appareil de mesure (38).

10. Appareil selon l'une des revendications 3 à 9, caractérisé en ce que dans la cuve de photosynthèse (2), le tube de transit (19) a une embouchure (21) dont la direction est, en service, horizontale de manière à recevoir le rameau (18) en position sensiblement horizontale.

11. Appareil selon l'une des revendications 3 à 10, caractérisé en ce que les moyens capables de contenir un liquide comprennent une cuve de dégagement (4), ouverte en direction opposée au fond, et présentant dans le bord de sa paroi latérale (9) opposé au fond (16), une encoche (24) destinée à soutenir en position inclinée un tube à essais (26) dont l'ouverture entoure, en service, la seconde extrémité (23) du tube de dégagement (19).

12. Appareil selon l'une des revendications 1 à 11, caractérisé en ce que la cuve (2) comporte une paroi (7) présentant une fente (61) s'ouvrant vers le haut, dans laquelle est engagé de manière étanche et amovible un insert (62) traversé par le tube de transit (19).

13. Appareil selon les revendications 1 à 12, caractérisé en ce qu'il a, vu de dessus, une forme rectangulaire allongée permettant de disposer plusieurs appareils semblables (29) côte à côte sur la table lumineuse (31) d'un rétroprojecteur (32).

14. Appareil selon l'une des revendications 1 à 13, caractérisé en ce que le tube (19) comporte entre ses deux extrémités une région sensiblement horizontale de visualisation.

15. Appareil selon la revendication 14, caractérisé en ce que, en vue de l'utilisation sur une table lumineuse (31), en particulier celle d'un rétroprojecteur (32), ladite région du tube (19) et l'appareil lui-même au voisinage de ladite région sont sensiblement transparents selon un axe qui est sensiblement vertical lorsque l'appareil est en position de service, pour permettre l'observation de bulles de gaz (27) transitant dans le tube (19), sous l'éclairage de la table lumineuse (31).

**Ansprüche**

1. Gerät zur Detektion des Austausches durch das geschnittene Ende eines Pflanzenzweiges, mit einer Wanne (2) und einem Durchgangsrohr (19), das mit einem ersten Ende mit der Wanne (2) in Verbindung steht und von dem mindestens eines der Enden dazu bestimmt ist, das geschnittene Ende eines Pflanzenzweiges aufzunehmen, dadurch gekennzeichnet, daß einem zweiten Ende (23) des Rohres (19) Mittel (4, 80) zugeordnet sind, die fähig sind, eine Flüssigkeit zu enthalten, wobei das Durchgangsrohr zumindest bei nicht vorhandenem Zweig zwischen der Wanne (2) und den zum Enthalten einer Flüssigkeit fähigen Mitteln (4, 80) eine Verbindung zur Bildung kommunizierender Gefäße herstellt.

2. Gerät nach Anspruch 1 zur Verwendung als Potometer, dadurch gekennzeichnet, daß das für die Aufnahme des geschnittenen Endes des Zweiges adaptierte Ende des Durchgangsrohres das zweite Ende (23) des Rohres ist, und daß zur Bildung der zum Enthalten einer Flüssigkeit fähigen Mittel ein dem zweiten Ende (23) des Rohres benachbarter Endbereich (80) desselben im Betrieb nach oben gerichtet ist.

3. Gerät nach Anspruch 1, zur Verwendung als Photosynthesegerät, dadurch gekennzeichnet, daß die Wanne eine Photosynthesewanne (2) ist, bei der mindestens eine Seite (16) lichtdurchlässig ist, und daß das für die Aufnahme des geschnittenen Endes (22) eines Pflanzenzweiges (18) bestimmte Ende des Durchgangsrohres (19) das erste Ende (21) des Durchgangsrohres (19) ist.

4. Gerät zur Photosynthese nach Anspruch 3, dadurch gekennzeichnet, daß im Hinblick auf die Verwendung auf einem Leuchttisch (31), insbesondere auf einem Leuchttisch eines Overheadprojektors (32), die lichtdurchlässige Seite der Photosynthesewanne der Boden letzterer ist.

5. Gerät nach Anspruch 4, dadurch gekennzeichnet, daß es Mittel (39, 41 bis 44) zur Einstellung der Illumination der Photosynthesewanne (2) durch den Boden (16) letzterer hindurch umfaßt, und daß die zum Enthalten einer Flüssigkeit fähigen Mittel (4) unabhängig von den Mitteln (39, 41 bis 44) zur Einstellung der Illumination in Richtung einer im Betrieb im wesentlichen vertikalen Achse lichtdurchlässig sind.

6. Gerät nach Anspruch 5, dadurch gekennzeichnet, daß die Mittel zur Einstellung der Illumination im Inneren der Photosynthesewanne (2) unter dem Boden der Photosynthesewanne (2) Mittel (39, 42) umfassen, um dort aus der Gruppe bestehend aus lichtundurchlässigen Schirm (41), farbigem lichtdurchlässigen Schirm (42), Zusatzwanne (44) u. dgl. ausgewählte Einrichtungen anzubringen.

7. Gerät nach einem der Ansprüche 3 bis 6, gekennzeichnet durch Mittel (6, 7, 11, 12, 36), die dazu dienen, die Photosynthesewanne (2), ausgenommen ihre lichtdurchlässige Seite (16), im wesentlichen lichtundurchlässig zu machen.

8. Gerät nach Anspruch 7, dadurch gekennzeichnet, daß die Mittel, die dazu dienen, die Photosynthesewanne (2) im wesentlichen lichtundurchlässig zu machen, einen abnehmbaren lichtundurchlässigen Deckel (36) umfassen, der an der Photosynthesewanne (2) auf ihrer dem Boden (16) entgegengesetzten Seite selektiv anbringbar ist.

9. Gerät nach Anspruch 8, dadurch gekennzeichnet, daß der Deckel von mindestens einer Öffnung (37) zum Einführen eines Meßgerätes (38) durchsetzt ist.

10. Gerät nach einem der Ansprüche 3 bis 9, dadurch gekennzeichnet, daß das Durchgangsrohr (19) in der Photosynthesewanne (2) eine Mündung (21) aufweist, deren Richtung im Betrieb horizontal ist, sodaß sie den Zweig (18) in im wesentlichen horizontaler Lage aufnimmt.

11. Gerät nach einem der Ansprüche 3 bis 10, dadurch gekennzeichnet, daß die zum Enthalten einer Flüssigkeit fähigen Mittel eine Abgabewanne (4) umfassen, die in dem Boden entgegengesetzter Richtung offen ist und in dem dem Boden (16) entgegengesetzten Rand ihrer Seitenwand (9) eine Aussparung (24) aufweist, die dazu dient, ein Reagenzglas (26) in Schrägstellung abzustützen, dessen Öffnung im Betrieb das zweite Ende (23) des Durchgangsrohres (19) umgibt.

12. Gerät nach einem der Ansprüche 1 bis 11, dadurch gekennzeichnet, daß die Wanne (2) eine Trennwand (7) besitzt, die einen nach oben offenen Schlitz (61) aufweist, in den ein von dem Durchgangsrohr (19) durchsetzter Einsatz (62) abdichtend und lösbar eingesetzt ist.

13. Gerät nach den Ansprüchen 1 bis 12, dadurch gekennzeichnet, daß es – von oben gesehen – eine langgestreckte Rechteckform hat, die erlaubt, mehrere solche Geräte (29) nebeneinander auf dem Leuchttisch (31) eines Overheadprojektors (32) anzuordnen.

14. Gerät nach einem der Ansprüche 1 bis 13, dadurch gekennzeichnet, daß das Rohr (19) zwischen seinen beiden Enden einen im wesentlichen horizontalen Sichtanzeigebereich besitzt.

15. Gerät nach Anspruch 14, dadurch gekennzeichnet, daß im Hinblick auf eine Verwendung auf einem Leuchttisch (31), insbesondere auf dem eines Overheadprojektors (32), der genannte Bereich des Rohres (19) und das Gerät selbst in der Umgebung des genannten Bereiches in Richtung einer Achse im wesentlichen lichtdurchlässig sind, die, wenn sich das Gerät in der Betriebsstellung befindet, im wesentlichen vertikal ist, um die Beobachtung von durch das Rohr (19) hindurchgehenden Gasblasen (27) unter dem Licht des Leuchttisches (31) zu ermöglichen.

**Claims**

1. Apparatus to detect exchanges through the cut end of a plant branch, comprising a tank (2), a transit tube (19) connected by a first end with said tank (2) and one of whose ends at least is intended to receive the cut end of a plant branch, characterized in that a second end (23) of said tube (19) is associated with means (4, 80) able to contain a liquid, the transit tube establishing, at least in the absence of the branch, a communicating vessels link between said tank (2) and said means able to contain a liquid (4, 80).

2. Apparatus according to claim 1, for use as a potometer, characterized in that the end of the transit tube suited to receive the cut end of the branch is said second end (23) of the tube, and wherein as means able to contain a liquid, an end area (80) of the tube, adjacent to said second end (23) thereof, is directed upward when in operation.

3. Apparatus according to claim 1, for use as a photosynthesis apparatus, characterized in that the tank is a photosynthesis tank (2) whose one face (16) at least is permeable to light, and wherein the end of said transit tube (19) intended to receive the cut end (22) of a plant branch (18), is the first end (21) of transit tube (19).

4. Photosynthesis apparatus according to claim 3, characterized in that, for use on a light table (31), in particular on the light table of an overhead projector (32), the face permeable to light of the photosynthesis tank is the bottom thereof.

5. Apparatus according to claim 4, characterized by comprising means (39, 41 to 44) to regulate the illumination of said photosynthesis tank (2) through the bottom (16) of the latter, and in that said means able to contain a liquid (4) are transparent along an axis approximately vertical in operation, independently of the means to regulate illumination (39, 41 to 44).

6. Apparatus according to claim 5, characterized in that said means to regulate the illumination inside said photosynthesis tank (2) comprise, under the bottom (16) of the photosynthesis tank (2), means (39, 42) to position there elements selected from the group comprising opaque screen (41), colored translucent screen (42), additional tank (44) and the like.

7. Apparatus according to any of claims 3 to 6, characterized by means (6, 7, 11, 12, 36) to make said photosynthesis tank (2) approximately opaque with the exception of its face (16) permeable to light.

8. Apparatus according to claim 7, characterized in that the means to make said photosynthesis tank (2) approximately opaque comprise an opaque removable cover (36), selectively mountable onto said photosynthesis tank (2) opposite the bottom (16).

9. Apparatus according to claim 8, characterized in that the cover is pierced by at least one orifice (37) for introduction of a measuring device (38).

10. Apparatus according to any of claims 3 to 9, characterized in that said transit tube (19) has in said photosynthesis tank (2) a mouth (21) whose direction is horizontal in operation to receive the branch (18) in an approximately horizontal position.

11. Apparatus according to any of claims 3 to 10, characterized in that the means able to contain a liquid comprise a release tank (4), opening away from the bottom, and exhibiting, in the edge of its lateral wall (9) away from the bottom (16), a notch (24) intended to support in an inclined position a test tube (26) whose opening, in operation, surrounds the second end (23) of the transit tube (19).

12. Apparatus according to any of claims 1 to 11, characterized in that said tank (2) comprises a wall (7) exhibiting a slot (61) opening upward, in which an insert (62), through which said transit tube (19) extends, is removably and leak-tightly inserted.

13. Apparatus according to any of claims 1 to 12, characterized by having, in top view, an elongated rectangular shape making it possible to place several similar apparatus (29) side by side on the light table (31) of an overhead projector (32).

14. Apparatus according to any of claims 1 to 13, characterized in that the tube (19) comprises an approximately horizontal display area between its two ends.

15. Apparatus according to claim 14, characterized in that, for use on a light table (31), in particular that of an overhead projector (32), said area of the tube (19) and the apparatus itself close to said area are substantially transparent along an axis which is substantially vertical when the apparatus is in operation position, to allow observation of gas bubbles (27) travelling through said tube (19) under the illumination from the light table (31).

FIG_11

FIG_1

FIG. 2

FIG. 3

FIG. 4

FIG_6

FIG_5

FIG_7

FIG. 8

FIG. 9

FIG. 10

EP 0 316 423 B1